(19) Europäisches Patentamt

European Patent Office

Office européen des brevets

(11) **EP 0 526 172 B1**

(12) **EUROPEAN PATENT SPECIFICATION**

(45) Date of publication and mention
of the grant of the patent:
**12.02.1997 Bulletin 1997/07**

(51) Int Cl.6: **F23L 15/02**, F23M 5/08

(21) Application number: **92306896.9**

(22) Date of filing: **29.07.1992**

(54) **Heat recovery type combustion apparatus**

Verbrennungsvorrichtung vom Wärmerückgewinnungstyp

Appareil de combustion à récupération de chaleur

(84) Designated Contracting States:
**DE FR GB**

(30) Priority: **29.07.1991 JP 59434/91 U**
**21.04.1992 JP 101191/92**

(43) Date of publication of application:
**03.02.1993 Bulletin 1993/05**

(73) Proprietors:
• **FURNACE TECHNO CO LTD**
**Sawadaseitoku Bld.,**
**Yokohama-shi, Kanagawa-ken (JP)**
• **CHIYODA CORPORATION**
**Yokohama-shi Kanagawa-ken (JP)**

(72) Inventor: **Hirose, Yasuo**
**Yokohama-shi, Kanagawa-ken (JP)**

(74) Representative: **Rees, David Christopher et al**
**Kilburn & Strode**
**30 John Street**
**London WC1N 2DD (GB)**

(56) References cited:
**DE-A- 2 624 874**          **DE-A- 4 013 484**
**GB-A- 2 208 423**          **US-A- 3 077 926**
**US-A- 4 512 266**

• **PATENT ABSTRACTS OF JAPAN vol. 7, no. 283**
**(M-263)(1428) 16 December 1983 & JP-A-58 158**
**415 (TAIKISHIYA) 20 September 1983**

## Description

This invention relates to a heat recovery type combustion apparatus according to the preamble of claim 1 which is configured to utilise the heat of exhaust gas arising from combustion for heating the air to be used for combustion.

In the combustion apparatus arrangements used in such industry grade furnaces as forging furnaces, normalising furnaces and refining furnaces, and in such steam-generation apparatus for turbines, heat recovery type combustion apparatus which are configured to utilise the heat of exhaust gas emanating from combustion for heating the air to be used for the combustion have been enjoying prevalent acceptance.

The recuperator which is used in this type of combustion apparatus is generally provided with a specific heat exchanger interposed between an exhaust gas line and a combustion air line which are closely disposed to each other. Thus, heat exchange between the air and the exhaust gas flowing through the two lines is made possible and the heat of the exhaust gas resulting from combustion can be used for heating the air for the combustion. The heat which is recovered by means of this recuperator corresponds to about the 50% point of the temperature level. In the case of an n industry grade furnace which gives rise to exhaust gas at a temperature of 1,200°C, for example, the combustion air which has exchanged heat with the exhaust gas then has a temperature of about 600°C.

The recuperator is severely restricted with regard not only to the material for its construction but also the space for its installation. It may possibly occupy more floor space than the main body of the furnace or heating apparatus.

Recently, the present inventor has proposed combustion apparatus (Japanese Unexamined Patent Publication No. 222,102/1989) which is configured as illustrated in Figures 9 and 10.

This combustion apparatus 100 is provided with a burner 112 for heating a substance W inside the main body R of a furnace. In the all of the furnace near the burner 112 there is located a regenerative member 122 made of an air-pervious ceramic material, with a cylindrical shape and partitioned to the pattern of a honeycomb. The regenerative member 122 absorbs the heat of the hot exhaust gas when this exhaust gas is discharged from within the main body R and allows this heat to raise the temperature of the combustion air which is passing through an air conduit 119. The supply of heat to the combustion air is caused to continue by causing the regenerative member 133 to rotate the means of a motor M through the medium of a rotary shaft 123.

However, since this combustion apparatus 100 must rotate the regenerative member 122 exposed to the interior of the main body R which is destined to rise to a high temperature, it is necessary either to interpose between the rotary shaft 123 and the motor M heat-insulating means capable of intercepting the heat transmitted from the regenerative member 122 via the rotary shaft 123 to the motor M, or to set the motor M at a position so distant as to disrupt the thermal effect of the regenerative member 122. The provision of these means adds to the size of the combustion apparatus 100 or complicates its overall configuration.

Further, the regenerative member 122 of this combustion apparatus 100 remains at an elevated temperature while in service and at a low temperature while out of service and alternatively expanding in spite its being a ceramic material. When the regenerative member made of ceramic material which alternatively expands and contacts as described above is rotated, the necessary increase in size can only be accommodated with difficulty. A combustion apparatus with a large capacity for combustion which consumes the combustion air and discharges the exhaust gas both in huge volumes, therefore, is not easily attained.

Further, with the regenerative apparatus which alternately expand and contracts and which at the same time rotates, it is difficult to set the burner in a central location. It therefore suffers the disadvantage that the burner and the air conduit are separated from each other, the flexibility with which the size, sharpness, etc. of a flame emitted from the burner are controlled is degraded, and the capacity for control or versatility dwindles. Though various electrical control devices may be used for the purpose of improving the controllability of the burner, the use of these devices is not desirable because they increase the cost of the apparatus as a whole.

This invention has been perfected for the solution of the problems suffered by the prior techniques as described above. The first object of this invention is to provide a heat recovery type combustion apparatus which is capable of enhancing the intensity of fire and the temperature of combustion, is simple in construction, has flexibility in the formation of flame, is able to allow addition to size, is effective in saving energy, enjoys safety of operation, and has a long service life.

The second object of this invention is to provide an ash-dissolving furnace which raises the temperature of the combustion air to a level beyond the upper limit attainable by conventional heat exchangers to raise the temperature of combustion sufficiently to dissolve ash and, at the same time, coat the inner wall of the furnace with the dissolved ash, and so help to prevent furnace loss by fusion.

GB-A-2208420 discloses a heat recovery type combustion apparatus including a burner, a combustion air conduit, an exhaust gas conduit and an air-pervious regenerative heat exchange member. The combustion air conduct and the exhaust gas conduit are formed within a rotary duct.

DE-A-2624874 discloses a combustion apparatus with a regenerative member mounted in its wall. In this case, the exhaust gas itself is subjected to combustion.

Accordingly, the present invention provides a burner for heating a substance located within the main body of the combustion apparatus; an air conduit supplying combustion air to the burner; an exhaust gas conduit for discharging exhaust gas arising from combustion from the main body of the combustion apparatus; and a heat-exchange member arranged to use the heat from the exhaust gas to heat the combustion air flowing through the air conduit; the heat-exchange member being in the form of an air-pervious regenerative member made of a ceramic substance; a rotary duct being located inside a main body case disposed so as to communicate with the regenerative member; the air conduit and exhaust gas conduit being formed within the rotary duct independently of each other throughout the entire length of the rotary duct from the inlet to the outlet; a fuel pipe for supplying fuel to the burner being installed within the rotary duct and extending through a substantially central position of the regenerative member; the rotary duct being rotatable by rotary means and arranged to cause the combustion air to flow along the air conduit through the regenerative member into the main body of the combustion apparatus and to cause the exhaust gas to flow through the interior of the regenerative member and along the exhaust gas conduit; characterised in that the regenerative member is located within a wall of the main body of the combustion apparatus; the air conduit and the exhaust gas conduit within the rotary duct terminate adjacent a surface of the regenerative member at a respective air outlet and exhaust gas inlet; and the said air outlet and exhaust gas inlet are arranged sequentially in a circumferential sense about the axis of the rotary duct, whereby rotation of the rotary duct results in the said air outlet and the said exhaust gas inlet moving progressively over the said surface of the regenerative member in sequence.

The rotary duct is preferably disposed so that the air conduit and the exhaust gas conduit may be positioned alternately in the circumferential direction. The air duct is desired to have its leading terminal closed with an end plate containing numerous small holes. The rotary duct is preferably arranged to allow a prescribed gap between itself and the regenerative member.

Preferably an air pipe is provided for supplying motive air to the centre of the fuel pipe. The main body of the combustion furnace may concurrently serve as the body of an ash-dissolving furnace. In this case, the main body of the combustion apparatus is desired to be provided with cooling means capable of spraying or directing a fluid of relatively low temperature in the form of film on the lateral terminal face of the furnace body of the regenerative member.

While the combustion apparatus constructed as described above is in service, the regenerative member is heated by the radiant heat arising from combustion and the hot exhaust gas flowing through the exhaust gas conduit. While the apparatus is out of service, the regenerative member is left cooling. Since the regenerative member is fixed to the main body of the combustion apparatus, it poses no problem even when it is formed in a relatively large size. It is therefore possible to provide for a high capacity for combustion with a simple construction.

By rotating the passing air side, namely the side of the air conduit and the exhaust gas conduit, instead of rotating the regenerative member, the combustion air flowing out of the air conduit is heated while the air flowing through the interior of the regenerative member in a heated state and the hot exhaust gas flowing through the exhaust gas conduit heats the regenerative member. Even when the combustion air cools the regenerative member, it does not suffer any decrease of temperature because it is led to the increasingly hot parts of the regenerative member by the rotation of the duct. The operation of combustion which is effected with the hot combustion air proceeds at extremely high temperatures and the interval between the time the combustion is started at the time the prescribed elevated temperature is reached is shortened.

By closing the leading terminal of the air conduit with an end plate containing numerous small holes and discharging the high speed air from the air conduit in the direction of the regenerative member, the amount of the exhaust gas allowed to leak between the regenerative member and the rotary duct can be restrained.

Furthermore, since the burner is disposed substantially at a central position of the regenerative member, the combustion air during the process of combustion is blown out in the direction of the periphery of the flame formed by the burner and can therefore regulate the upward displacement of the flame radiated from the burner and, at the same time, promote complete combustion of the fuel. The prescribed gap between the rotary duct and the regenerative member causes the exhaust gas arising from combustion to be recirculated and enables the amount of discharged NOx to be lowered or controlled.

Moreover, the supply of motive air to the air pipe in the fuel pipe allows adjustment of the size or sharpness of the flame radiated from the burner, increases the flexibility of the flame, and enhances the controllability or versatility of the apparatus.

When this invention is embodied in an ash-dissolving furnace, since the combustion air is heated by the use of the regenerative member which in turn is heated with the exhaust gas, a sufficiently high temperature to dissolve even the ash produced in consequence of combustion of flame retardant fuel can be attained with ease. The ash-dissolving furnace, therefore, effects dissolution of the ash and coats the inner wall of the furnaces with a solidified crust of dissolved ash and consequently prevents the furnace from loss by fusion. This furnace allows flame retardant fuel to be used as ordinary fuel. The exhaust gas can be reclaimed as a fuel of low calorific value.

The invention may be carried into practice in various ways and some embodiments will now be described by way of example with reference to the accompanying drawings, in which:-

Figure 1 is a schematic cross section of a heat recovery type combustion apparatus according to one embodiment of this invention,

Figure 2 is a cross section on the line 2.2 in Figure 1;

Figure 3 is a more detailed cross-section illustrating the essential part of the apparatus of Figure 1;

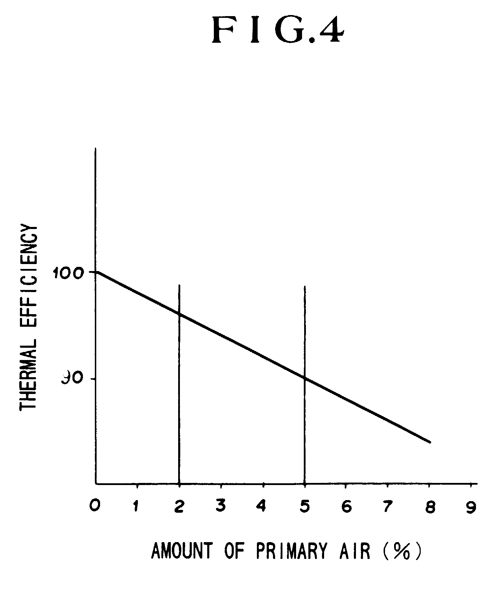

Figure 4 is a diagram illustrating the characteristics of control of the amount of motive air;

Figure 5 is a graph showing test results obtained using apparatus according to the invention;

Figure 6 is a schematic cross section illustrating another embodiment of this invention;

Figure 7 is a schematic cross section illustrating a further embodiment of this invention;

Figure 8 is a schematic cross section illustrating still a further embodiment of this invention;

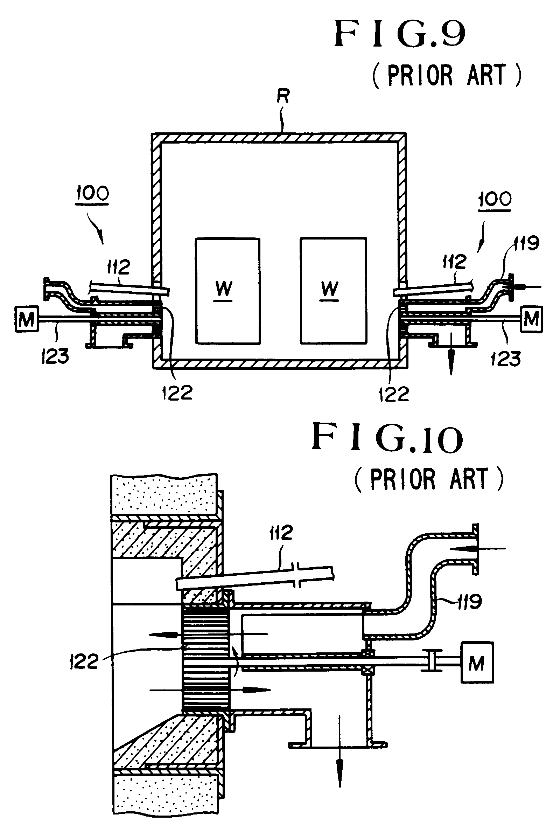

Figure 9 is a schematic cross section illustrating a conventional combustion apparatus; and

Figure 10 is a magnified cross section of the essential part of the apparatus of Figure 9.

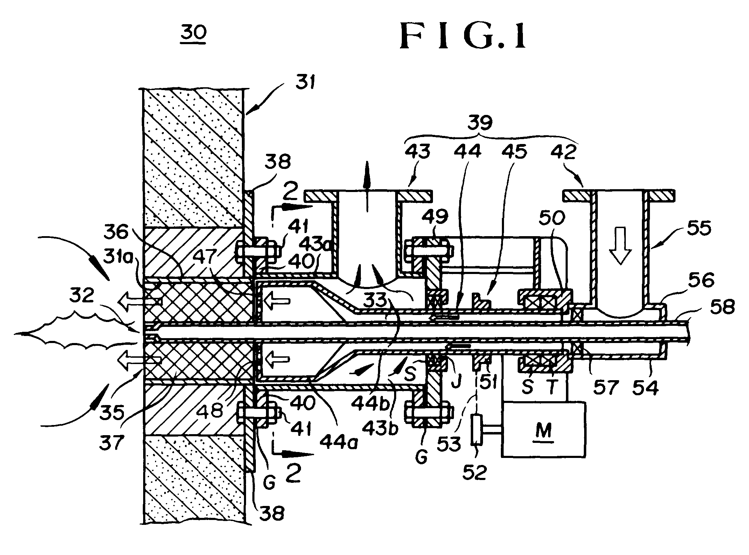

In Figure 1, a heat recovery type combustion apparatus 30 is attached to the lower part of the main body 31 of combustion apparatus in the form of a forging furnace used as a heat source for heating a substance such as an ingot place inside the main body 31 and subjected to heating.

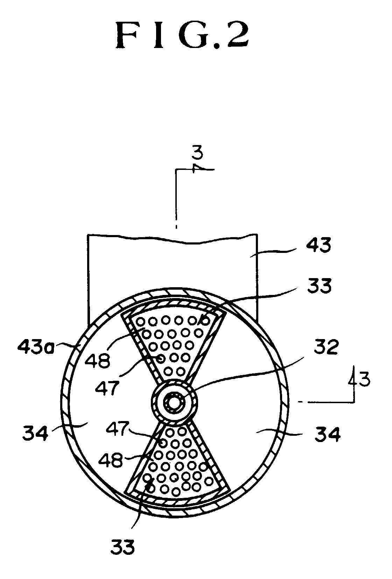

The heat recovery type combustion apparatus 30 is provided with a burner 32 for radiating flame in the direction of the substance placed inside the main body 31 and subjected to combustion, an air conduit 33 disposed in the proximity of the burner 32 and adapted to allow flow of combustion air to the interior, an exhaust gas conduit 34 (Figure 2) disposed in the proximity of the air conduit 33 and adapted to discharge exhaust gas arising from combustion out of the interior of the main body 31, and a heat-exchange member 35 capable of transmitting the heat of the exhaust gas to the combustion air flowing through the air conduit 33.

The main body 31 of combustion apparatus is made of a refractory material such as refractory bricks. It has an opening 31a formed in a lateral wall. The heat-exchange member 35 mentioned above is set in place inside this opening 31a. This heat-exchange member 35 is formed of an air-pervious regenerative member 37 made of a ceramic substance and shaped like a honeycomb. The regenerative member 37 is supported by a mortar 36 interposed between the member 37 and the wall of the opening 31a. The burner 32 is located at the centre of the regenerative member 37 the leading end of which is exposed inside the main body 31 of combustion apparatus. This burner 32 is an ordinary gas or oil burner. The combustion air from the air conduit 33 is conveyed through the regenerative member 37 which encircles the burner 32. Since the combustion air is conveyed through the periphery of the burner 32, there is derived a secondary effect of precluding the upward displacement of the flame of the burner 32 by the combustion air itself.

A plate 38 for supporting the burner 32 is formed along the outer edge of the opening 31a. A flange 40 of a main body case 39 is connected to this plate 38 with the bolts 41 through the medium of a gasket G so as to establish communication between the main body case 39 and the regenerative member 37.

The main body case 39 is provided with an air inlet part 42 for introducing combustion air by means of a blower, for example, an outlet part 43 for discharging exhaust gas from the interior for the case, a rotary duct 44 located between the air inlet part 42 and the regenerative member 37, and a driving means 45 for rotating the rotary duct 44.

A large diameter part 44a of the rotary duct 44 is located with the body 43a of the outlet part 43.

This large diameter part 44a is part of the air conduit 33 and has a cross section of the shape of an obtuse sector as illustrated in Figure 2. Inside the body 43a, the air conduit 33 and the exhaust gas conduit 34 are arranged so as to alternate in circumferential direction. The large diameter part 44a having the shape of an acute sector constitutes an air conduit 33 and the part so formed as to have a cross section of the shape of an obtuse sector serves as the exhaust gas conduit 34.

The air conduit 33 and exhaust gas conduit 34 are shaped so as to form two separate passages throughout the entire length from the inlet to the outlet. More specifically, the air conduit 33 is so adapted that the air flowing in through the air inlet part 42 passes through the rotary duct 44 gradually flaring from a small diameter part 44b to the large diameter part 44a and is discharged in the direction of the regenerative member 37. In the air conduit 33 in this embodiment, leading side terminal of the regenerative member 37 is closed with an end plate 48 containing numerous small holes 47 so that the combustion air on being discharged through the small holes 47 converts to a flow of high speed and, by virtue of the ensuing Venturi effect, draw into the air conduit 33 any exhaust gas liable to leak between the regenerative member 37 and the rotary duct 44, thus minimising the amount of exhaust gas which might leak.

The exhaust gas conduit 34 is so arranged that the exhaust gas discharged from the regenerative member 37 passes through the part having a cross section of the shape of an obtuse sector and on to the inner empty space 43b of the body 43a in the outlet part 43.

The driving means 45 rotatably supports the rotary duct 44 with seal members S and bearing J. These are located respectively in the inner terminal part of a closing plate 49 arranged to close the side of the body 43a opposite to the regenerative member 37 in the outlet part 43, and also in the inner terminal part of a supporting plate 50 located at the free end of the small diameter part 44b in the rotary duct 44. The driving means 45 comprises a chain 53 which connects a sprocket 51 fixed between the two bearings J and J to a drive gear 52 rotated by a motor M.

In this embodiment, since the rotary duct 44 is supported in an ideally balanced state with the two bearings J and J as described above, it can be rotated at a relatively high speed and the thermal efficiency of the furnace can be improved by increasing the speed of rotation.

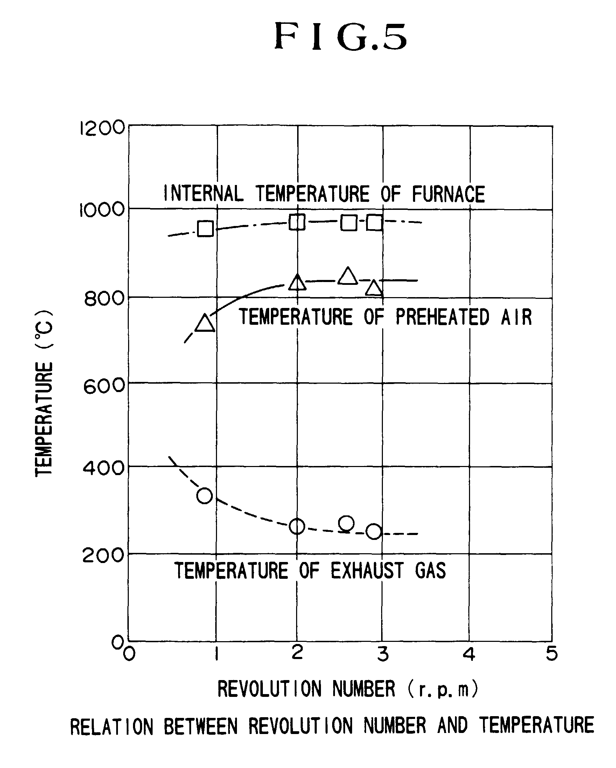

An experiment was performed to determine the relationship between the speed of rotation of the rotary duct 44 and the thermal efficiency of the furnace. The results are shown in Figure 5.

This experiment was performed by operating the combustion apparatus of this embodiment using LPG as a fuel to determine the temperature of the exhaust gas, the temperature of the pre-heated air, and the internal temperature of the furnace relative to the speed of rotation of the rotary duct 44. In Figure 5, the horizontal axis represents the speed of rotation of the rotary duct 44 and the vertical axis represents the temperature.

It is clearly noted from the results of this experiment that the temperature of the exhaust gas sharply increases when the speed rotation of the rotary duct 44 falls below 1 r.p.m.

Here, the thermal efficiency can be found from the relationship between the amount of heat introduced and the amount of heat lost from the exhaust gas as indicated by the following formula.

$$\eta = (Q - Cp.G.T).100/_Q$$

wherein

$\eta$ : stands for thermal efficiency
Q : for thermal capacity
Cp : for specific heat of the exhaust gas
G : for the amount of the exhaust gas
T : for the temperature of the exhaust gas

The thermal efficiency is found by applying the results of the aforementioned experiment to this formula. Taking a case in which the rotation is made at a relatively high rate of 2 r.p.m., for example, the corresponding exhaust gas temperature is 250°C. The thermal efficiency in this case, therefore, is found as follows.

$$\eta = (25000 - 0.32.26.250) \times 100/25000 = 91.68 \ (\%)$$

This indicates that the combustion furnace manifests an outstanding thermal efficiency exceeding 90%.

The excellent thermal efficiency manifested during the rotation at such a relatively high speed is logically explained by a postulate that when the speed of rotation of the rotary duct 44 is increased, the air discharged from the rotary duct 44 considerably lowers the temperature of the regenerative member and thus increases more greatly the temperature of the introduced air. As a result, the thermal efficiency is enhanced.

The air inlet part 42 is formed by joining a basal pipe 54 to a branch pipe 55 in the pattern of an inverted T. One end of this basal pipe 54 is closed with a lid member 56 and the other end is attached to the supporting plate 50 of the small diameter part 544b so as to allow communication with the rotary duct 44. Reference numeral "57" in Figure 1 represents a flow regulating plate.

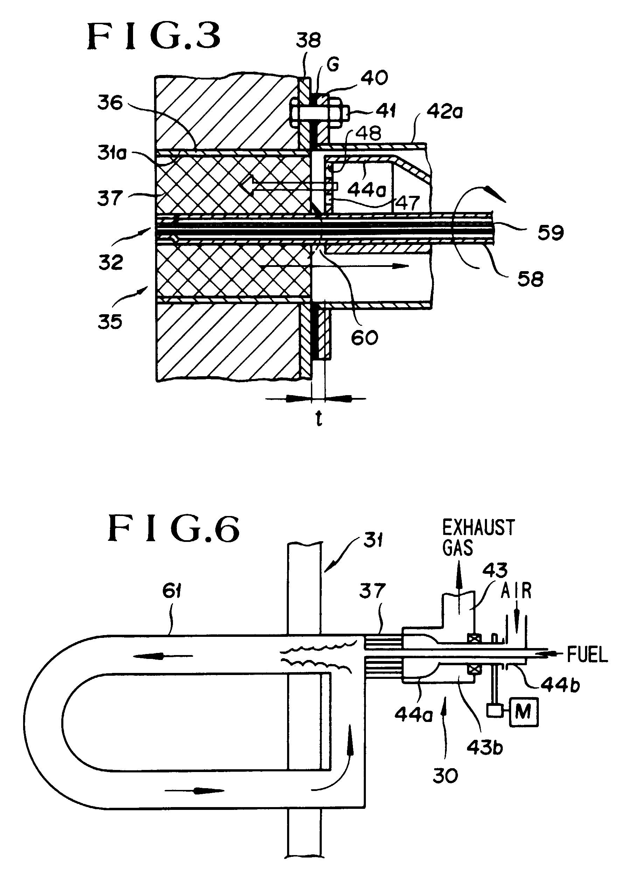

A fuel pipe 58 for supplying fuel to the burner 32 runs along the central axis of the rotary duct 44, and the fuel pipe 58, an air pipe 59 (Figure 3) for supplying motive air (driving air) to the burner 32 is located within the fuel pipe 58. The size or sharpness of the flame radiated from the burner 32 is adjusted by controlling the amount of the motive air released from this air pipe 59. In the light of the relationship between the sharpness of the flame produced with the theoretical amount of air and the loss of heat, the proper amount of the motive air is found to be approximately in the range of between 2 and 5%. By adjusting the motive air, the flexibility, controllability, or versatility of the flame can be widened.

The air conduit 33, as illustrated in Figure 3, does not extend to the terminal face of the regenerative member 37 but is formed so as to leave a gap t between the itself and the regenerative member 37. This gap t may be used as a communicating part 60 for allowing part of the exhaust gas to by-pass as indicated by the broken line arrow in the diagram. As a result, the amount of NOx in the exhaust gas can be adjusted because part of the exhaust gas is drawn into the air conduit 33 by suction and again consumed for combustion. The use of part of the exhaust gas for this consumption is facilitated by causing the combustion air to be discharged at a high speed by means of the numerous small holes 47 formed in the end plate 48 of the rotary duct 44.

Now, the operation of the present embodiment will be described.

The heat recovery type combustion apparatus 30 is attached to a forging furnace, the burner 32 is ignited while the motor M is kept in rotation, and a blower is operated to feed combustion air.

The fuel passing through the fuel pipe 58 is ejected from the burner 32 and is supplied with oxygen from the combustion air introduced through the air conduit 33 and the regenerative member 37. The flame produced by the combustion using the oxygen-enriched combustion air extends in the direction of the substance subjected to combustion heating, for example, an ingot. As a result, the internal temperature of the forging furnace is gradually elevated and, after the prescribed period has elapsed, the ingot in the forging furnace is heated and softened.

The exhaust gas passes through the regenerative member 37 and is discharged out of the exhaust gas conduit 34. The regenerative member 37 is heated to a high temperature by the passage of the exhaust gas. When the combustion air discharged through the air conduit 33 kept in rotation is introduced into the regenerative member 37, therefore, this combustion air is heated by the regenerative member 37. This heating may be considered instantaneous in the sense that the combustion air is heated immediately by blowing air out of the air conduit 33 in the direction of the regenerative member 37. Thus it entails no loss of heat during the process of heating and allows efficient use of the air heated to a high temperature. The operation of combustion using this hot air proceeds at a very high temperature. Thus, the interval between the time combustion begins and the time when the prescribed temperature is reached becomes short. The exhaust gas, after transferring its heat energy to the regenerative member 37, passes along the outer periphery of the air conduit 33 which conveys air of relatively low temperature, and is then discharged from the exhaust gas conduit 34. The combustion apparatus of this embodiment, therefore, does not always require a smokestack.

When part of the exhaust gas flows through the communicating part 60 between the rotary duct 44 and the ceramic regenerative member 37 during the process of combustion, the amount NOx allowed to remain in the exhaust gas can be restricted to below a prescribed level because part of the exhaust gas is admixed with the air on the air conduit 33 side and consequently consumed again in combustion. The provision of this communicating part 60 further has the advantage in that the overall configuration of the apparatus is simplified and the efficiency of apparatus assembly is enhanced because this communicating part 60 obviates the necessity for sealing the gap between the air conduit 33 and the exhaust gas conduit 34.

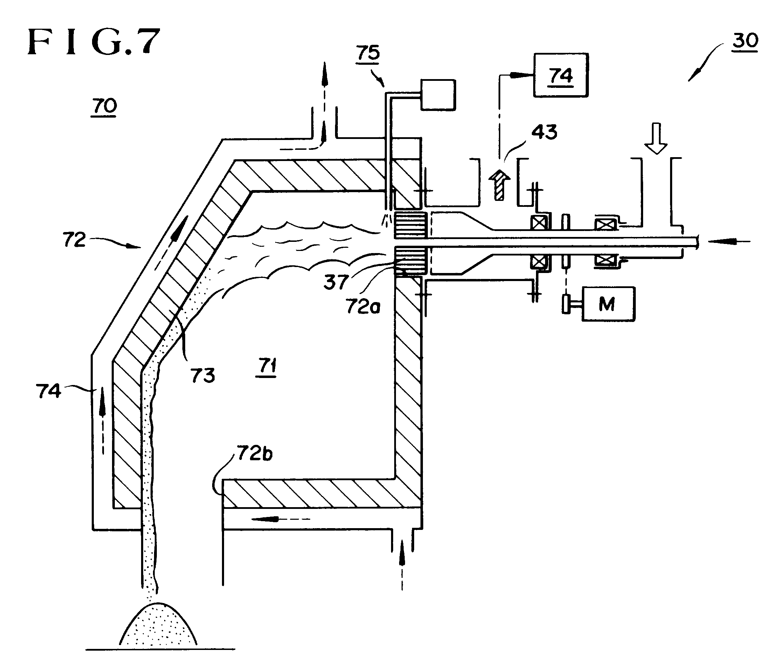

Figure 6 illustrates a combustion apparatus as another embodiment of this invention. In this embodiment, the combustion apparatus 30 is connected to a radiant tube 61. The exhaust gas is not discharged into the interior of the furnace but allowed to flow inside the radiant tube 61 and, is discharged out of the exhaust gas conduit 34 after the substance subjected to heating has been heated solely by the heat of the ambient air. Since the combustion apparatus 30 is structurally identical with that of the preceding embodiment, it forms a clean system from the environmental point of view.

Figure 7 illustrates a combustion apparatus according to another embodiment of this invention. This combustion apparatus is intended for use in an ash-dissolving furnace which operates by the combustion of flame retardant coarse fuel, such as CWM (Coal Water Mixture) etc., which produces ash on combustion (hereinafter referred to simply as "flame retardant fuel") and smoothly discharges dissolved ash out of the furnace proper. Generally when such a flame retardant fuel as CWM or fine coal dust which produces ash on combustion is burnt, the ash content of the fuel is melted or partly melted in the high temperature flame and is then deposited on the inner wall of the furnace possibly resulting in undesirable clogging. To avoid this, one known practice is to maintain the inner temperature of the furnace above the melting point of the ash thereby positively melting the ash and causing the ash to be discharged from the furnace in the form of molten slug.

When the melting point of ash happens to be as high as about 1,450°C, for example, the proportion of ash eliminated is usually low because thorough melting and deposition of the ash can not be achieved with the ordinary air.

For the solution of this problem, there have been proposed amongst other systems,

a) a method which lowers the melting point of the ash by incorporating a melting point-lowering agent such as, for example, lime in the ash,
b) a method which elevates the combustion temperature by pre-heating the air by the use of a heat exchanger,
c) a method which elevates the combustion temperature by the use of any oxygen-enriched air.

The method of a) is undesirable because it not merely adds to the cost of combustion but also increases the amount of ash produced. The method of b) cannot be expected to effect a sufficient temperature elevation because of the limit imposed on the heat exchanger itself. The method of c) suffers from unduly large increases in the cost of combustion because of the limit imposed on the supply of oxygen.

When the combustion apparatus described above is used, the elevation of the combustion temperature and the smooth discharge of the dissolved ash from the ash from the furnace are attained without requiring use of an oxygen-enriched air.

A slag tap type ash dissolving furnace 70 illustrated in Figure 7 is provided with a furnace body 72 having a combustion chamber 71 and the combustion apparatus 30 to be operated by the combustion of such flame retardant fuel as CWM (coal-water mixture).

The furnace body 72 has a water-cooled furnace wall with a water pipe 74 disposed outside a furnace wall 73 made of a castable refractory material. The furnace body 72 has an opening 72a formed at the top part of a lateral wall and a slag tap hole 72b formed in the bottom wall.

The combustion apparatus 30 is attached to the opening 72a. A heating device 74, such as a boiler may be attached to the outlet of the exhaust gas conduit 43 of the combustion apparatus 30, the boiler being capable of using as a fuel, the exhaust gas discharged via the exhaust gas conduit 43. When insufficient air for complete combustion of the flame retardant fuel introduced into the furnace is used as the combustion air, the fuel is partially burnt and results in the discharge of exhaust gas containing such flammable gases as CO and $H_2$ in large amounts though this has only a low calorific value. This low-calory gas can be used again as a fuel.

When the combustion apparatus 30 is used in an ash dissolving furnace, at the time that the combustion gas generated inside the furnace is discharged through the regenerative member 37, the possibility arises that some of the molten ash will be entrained by the exhaust gas and consequently caused to enter into the regenerative member 37, where it might be deposited to the extent of clogging it. It is, therefore, desirable to install cooling means 75 inside the furnace of the regenerative member 37 and cause the cooling means 75 to spray a low-temperature fluid such as, for example, air to lower the temperature of the molten ash to below its melting point.

In an ash dissolving furnace which employs the combustion apparatus 30 as described above, combustion air at very high temperature is produced efficiently because the regenerative member 37 is heated to a high temperature by the exhaust gas produced by the combustion of the flame retardant fuel and can consequently heat the combustion air. Thus, the operation of combustion which is performed with the hot air proceeds at a very high temperature.

Owing to the fact combustion take place at a high temperature, the ash content of the flame retardant fuel is allowed to contact the inner wall of the combustion chamber 71 and to deposit rapidly on the furnace body 73 which is cooled with the water pipe 74. At this time, the ash alone is deposited rapidly in the molten state on the inner wall if the fuel has been completely consumed already. If fine coal dust is still in the process of combustion and a layer of fused coal forms on the inner wall of the combustion chamber 71, the deposited coal layer remains intact and the combustion is completed.

In this way, the inner wall of the combustion chamber 71 is covered with the fused coal layer which gradually gains in thickness and gathers at the bottom part of the furnace under gravity, finally falling down through the slag tap holes 72b. Particularly when the ash is dissolved, the inner wall of the furnace is coated with the solidified crust of molten ash and, as a result, the furnace itself is prevented from loss of fusion.

When insufficient air for complete combustion of the fuel introduced into the furnace is used, the fuel is partially burnt and the exhaust gas discharged through the exhaust gas conduit 43 has virtually no ash content in spite of the fairly high temperature. However, it contains such flammable gases as CO and $H_2$ in large amounts, possessing a low calorific value. When this exhaust gas is supplied to a heating device such as a boiler, it can be used as a gaseous fuel. Thus, even an ash-containing flame retardant fuel can be converted into an easily handlable gaseous fuel which can be used efficiently.

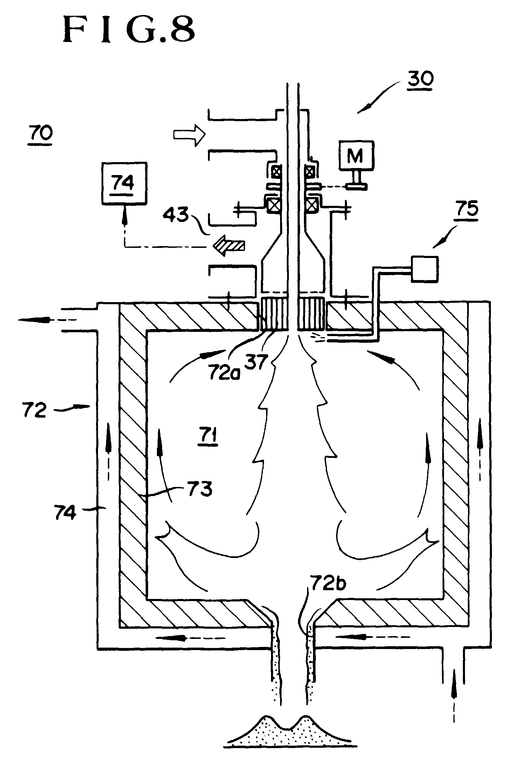

The combustion apparatus 30 described above may be configured vertically as illustrated in Figure 8 and attached to the top part of the furnace body 72, with a slag tap hole 72b formed at the centre of the bottom wall of the furnace body 72.

This invention can be embodied not only in such furnaces as forging furnaces and ash-dissolving furnaces which have been described above but also in various devices intended for application of heat such as drying devices and steam-generating devices represented by turbines. While the embodiments described represent cases in which air conduits 33 and exhaust gas conduits 34 are formed two each by partitioning the interior of the rotary duct 44, this invention also envisages the formation of a multiplicity of air conduits and exhaust conduits. Though the rotary duct 44 has been depicted as being provided at its entry with an air duct 59 for supplying motive air, the apparatus of this invention does not always find the need for this air duct.

## Claims

1. A heat recovery type combustion apparatus (30) comprising: a burner (32) for heating a substance located within the main body (31) of the combustion apparatus (30); an air conduit (33) supplying combustion air to the burner (32); an exhaust gas conduit (34) for discharging exhaust gas arising from combustion from the main body (31) of the combustion apparatus (30); and a heat-exchange member (37) arranged to use the heat from the exhaust gas to heat the combustion air flowing through the air conduit (33); the heat-exchange member (37) being in the form of an air-pervious regenerative member (37) made of a ceramic substance; a rotary duct (44) being located inside a main body case (39) disposed so as to communicate with the regenerative member (37) ; the air conduit (33) and exhaust gas conduit (34) being formed within the rotary duct (44) independently of each other throughout the entire length of the rotary duct (44) from the inlet to the outlet; a fuel pipe (58) for supplying fuel to the burner (32) being installed within the rotary duct and extending through a substantially central position of the regenerative member (37); the rotary duct (44) being rotatable by rotary means (45) and arranged to cause the combustion air to flow along the air conduit (33) through the regenerative member (37) into the main body (31) of the combustion apparatus (30) and to cause the exhaust gas to flow through the interior of the regenerative member (37) and along the exhaust gas conduit (34); characterised in that the regenerative member (37) is located within a wall of the main body (31) of the combustion apparatus (30); the air conduit (33) and the exhaust gas conduit (34) within the rotary duct (44) terminate adjacent a surface of the regenerative member (37) at a respective air outlet and exhaust gas inlet; and the said air outlet and exhaust gas inlet are arranged sequentially in a circumferential sense about the axis of the rotary duct (44), whereby rotation of the rotary duct (44) results in the said air outlet and the said exhaust gas inlet moving progressively over the said surface of the regenerative member (37) in sequence.

2. Apparatus as claimed in Claim 1, characterised in that the rotary duct (44) is arranged so that the air conduit (33) and the exhaust gas conduit (34) are alternatively positioned in the circumferential direction.

3. Apparatus as claimed in Claim 1 or Claim 2, characterised in that the air conduit (33) has its leading end closed with an end plate (48) containing a multiplicity of small holes (47).

4. Apparatus as claimed in any of Claims 1 to 3, characterised in that the rotary duct (44) has a prescribed gap between itself and the regenerative member (37) so as to form a communicating part, allowing flow of the exhaust gas into the interior of the air conduit (33).

5. Apparatus as claimed in any of Claims 1 to 4, characterised in that the pipe (58) is provided at its centre with an air pipe (59) for the supply of motive air.

6. Apparatus as claimed in any preceding Claim, characterised in that the main body (31) thereof is the furnace body of an ash dissolving furnace (70).

7. Apparatus as claimed in Claim 6, characterised in that the main body of the combustion apparatus is provided with cooling means (75) for directing a fluid of relatively low temperature in the form of film onto the furnace body side terminal surface of the regenerative member (37).

**Patentansprüche**

1. Verbrennungsvorrichtung (30) vom Wärmerückgewinnungstyp, aufweisend: einen Brenner (32) zum Aufheizen eines Substrates innerhalb des Hauptgehäuses (31) der Verbrennungsvorrichtung (30); eine Luftleitung (33) zum Liefern von Verbrennungsluft zu dem Brenner (32); eine Abgasleitung (34) zur Abführung von Abgasen der Verbrennung aus dem Hauptgehäuse (31) der Verbrennungsvorrichtung (30); und ein Wärmetauscherelement (37) zur Verwendung der Wärme der Abgase, um die Verbrennungsluft zu heizen, die durch die Luftleitung (33) fließt; wobei das Wärmetauscherelement (37) die Form eines luftdurchlässigen regenerativen Elements (37) aus einem keramischen Substrat besitzt; einen drehbaren Kanal (4)), der innerhalb der Hauptgehäuseumhüllung angeordnet ist, um mit dem regenerativen Element (37) im Austausch zu stehen; wobei die Luftleitung (33) und die Abgasleitung (34) unabhängig voneinander über die ganze Länge von dem Einlaß zu dem Auslaß in dem drehbaren Kanal (44) gebildet sind; ein Brennstoffrohr (58) zur Zuführung von Brennstoff zu dem Brenner (32), das innerhalb des drehbaren Kanales installiert ist und sich über eine im wesentlichen zentrale Position des regenerativen Elements (37) erstreckt; wobei der drehbare Kanal (44) durch eine Dreheinrichtung (45) drehbar ist und angeordnet ist, um die Verbrennungsluft entlang der Luftleitung (33) durch das regenerative Element (37) in das Hauptgehäuse (31) der Verbrennungsvorrichtung (30) fließen zu lassen und das Abgas durch das Innere des regenerativen Elements (37) und entlang der Abgasleitung (34) fließen zu lassen; dadurch gekennzeichnet, daß das regenerative Element (37) innerhalb einer Wand des Hauptgehäuses (31) der Verbrennungsvorrichtung (30) angeordnet ist; die Luftleitung (33) und die Abgasleitung (34) innerhalb des drehbaren Kanales (44) in Nachbarschaft zu einer Oberfläche des regenerativen Elements (37) an einem entsprechenden Luftauslaß und Abgaseinlaß enden; und der Luftauslaß und der Abgaseinlaß der Reihe nach in Umfangsrichtung um die Achse des drehbaren Kanales (44) angeordnet sind, wobei die Drehung des drehbaren Kanales (44) dazu führt, daß sich der Luftauslaß und der Abgaseinlaß progressiv nacheinander über die Oberfläche des regenerativen Elements (37) bewegen.

2. Vorrichtung nach Anspruch 1, dadurch gekennzeichnet, daß der drehbare Kanal (44) so angeordnet ist, daß die Luftleitung (33) und die Abgasleitung (34) abwechselnd in Umfangsrichtung positioniert sind.

3. Vorrichtung nach Anspruch 1 oder 2, dadurch gekennzeichnet, daß die Luftleitung (33) an ihrem Vorderende mit einer Endplatte (48) verschlossen ist, die eine Vielzahl kleiner Löcher (47) enthält.

4. Vorrichtung nach irgendeinem der Ansprüche 1 bis 3, dadurch gekennzeichnet, daß der drehbare Kanal (44) eine vorgeschriebene Lücke zwischen sich und dem regenerativen Element 837) aufweist, um einen Verbindungsteil zu bilden, der einen Fluß des Abgases in das Innere der Luftleitung (33) gestattet.

5. Vorrichtung nach irgendeinem der Ansprüche 1 bis 4, dadurch gekennzeichnet, daß das Rohr (58) in seinem Zentrum mit einem Luftrohr (59) für die Zuführung von bewegter Luft versehen ist.

6. Vorrichtung nach irgendeinem vorhergehenden Anspruch, dadurch gekennzeichnet, daß das Hauptgehäuse (31) derselben das Ofengehäuse eines Asche-lösenden Ofens (70) bildet.

**7.** Vorrichtung nach Anspruch 6, dadurch gekennzeichnet, daß das Hauptgehäuse der Verbrennungsvorrichtung mit einer Kühleinrichtung (75) versehen ist, um ein Fluid mit relativ niedriger Temperatur in der Form eines Filmes auf das Ofengehäuse seitlich von der Endoberfläche des regenerativen Elementes (37) zu richten.

## Revendications

**1.** Appareil de combustion à récupération de chaleur (30) comprenant : un brûleur (32) pour chauffer une substance se trouvant à l'intérieur du corps principal (31) de l'appareil de combustion (30); un canal d'air (33) amenant de l'air de combustion au brûleur (32); un canal de gaz brûlés (34) pour évacuer les gaz brûlés provenant de la combustion du corps principal (31) de l'appareil à combustion (30); et un échangeur de chaleur (37) à même d'utiliser la chaleur des gaz brûlés pour chauffer l'air de combustion s'écoulant dans le canal d'air (33); l'échangeur de chaleur (37) se présentant sous la forme d'un régénérateur perméable à l'air (37) fait d'un matériau céramique; un conduit rotatif (44) étant situé à l'intérieur d'un caisson principal (39) disposé de façon à communiquer avec le régénérateur (37); le canal d'air (33) et le canal de gaz brûlés (34) étant formés à l'intérieur du conduit rotatif (44) indépendamment l'un de l'autre sur toute la longueur du conduit rotatif (44) depuis l'entrée jusqu'à la sortie; une conduite de combustible (58) pour amener le combustible au brûleur (32) étant installée à l'intérieur du conduit rotatif et passant par une position essentiellement centrale du régénérateur (37); le conduit rotatif (44) pouvant être entraîné en rotation par un moyen de rotation (45) et étant à même d'amener l'air de combustion à s'écouler le long du canal d'air (33) via le régénérateur (37) dans le corps principal (31) de l'appareil à combustion (30) et d'amener les gaz brûlés à s'écouler via l'intérieur du régénérateur (37) et le long du conduit de gaz brûlés (34); caractérisé en ce que le régénérateur (37) est situé dans une paroi du corps principal (31) de l'appareil à combustion (30); le canal d'air (33) et le canal de gaz brûlés (34) dans le conduit rotatif (44) prenant fin à proximité d'une surface du régénérateur (37) au niveau d'une sortie d'air et d'une entrée de gaz brûlés respectives; et la sortie d'air et l'entrée de gaz brûlés étant disposées de manière séquentielle dans un sens périphérique autour de l'axe du conduit rotatif (44), la rotation du conduit rotatif (44) entraînant le déplacement progressif en séquence de la sortie d'air et de l'entrée de gaz brûlés sur la surface du régénérateur (37).

**2.** Appareil suivant la revendication 1, caractérisé en ce que le conduit rotatif (44) est disposé de sorte que le canal d'air (33) et le canal de gaz brûlés (34) soient positionnés de façon alternée dans le sens périphérique.

**3.** Appareil suivant la revendication 1 ou 2, caractérisé en ce que l'extrémité avant du canal d'air (33) est fermée par une plaque d'extrémité (48) comportant une pluralité de petits orifices (47).

**4.** Appareil suivant l'une quelconque des revendications 1 à 3, caractérisé en ce que le conduit rotatif (44) est séparé du régénérateur (37) par un espace imposé de façon à former une partie communicante, permettant l'écoulement des gaz brûlés à l'intérieur du canal d'air (33).

**5.** Appareil suivant l'une quelconque des revendications 1 à 4, caractérisé en ce que la conduite (58) est pourvue en son centre d'une conduite d'air (59) destinée à l'amenée de l'air comburant.

**6.** Appareil suivant l'une quelconque des revendications précédentes, caractérisé en ce que son corps principal (31) est celui d'un four à dissolution de cendres (70).

**7.** Appareil suivant la revendication 6, caractérisé en ce que le corps principal de l'appareil de combustion est pourvu d'un moyen de refroidissement (75) destiné à appliquer un fluide, à température relativement basse, sous la forme d'un film sur la surface d'extrémité latérale du corps de four du régénérateur (37).

FIG.1

# FIG.2

# F I G.3

# F I G.6

# F I G.4

# FIG.5

RELATION BETWEEN REVOLUTION NUMBER AND TEMPERATURE

14

# FIG.7

EP 0 526 172 B1

# F I G.8

# F I G. 9
## ( PRIOR ART )

# F I G. 10
## ( PRIOR ART )